# EUROPEAN PATENT APPLICATION

(11) **EP 4 198 801 A1**
(43) Date of publication of application: **21.06.2023**
(21) Application number: 21857396.2
(22) Date of filing: 07.07.2021
(51) Int. Cl.: G06F 30/17

(54) **DESIGN METHOD FOR ADIABATIC COUPLING WAVEGUIDE SEGMENT OF ADIABATIC COUPLER AND APPARATUS THEREFOR, AND DEVICE**

(30) Priority: 19.08.2020 CN 202010835813
(71) Applicant: Zhongxing Photonics Technology Co., Ltd., Nanjing, Jiangsu 210012 (CN)
(72) Inventor: YANG, Minyue, Nanjing, Jiangsu 210012 (CN)
(74) Representative: Zoli, Filippo
(86) International application number: PCT/CN2021/105025
(87) International publication number: WO 2022/037301

(57) **Abstract**

A design method for an adiabatic coupling waveguide segment (200) of an adiabatic coupler and an apparatus therefor, and a device. The design method comprises: acquiring an initial parameter of an adiabatic coupling waveguide segment (200), and determining an initial model of the adiabatic coupling waveguide segment (200) according to the initial parameter, wherein the initial model comprises a first coupling waveguide (210) and a second coupling waveguide (220), and a gap (230) is arranged between the first coupling waveguide (210) and the second coupling waveguide (220) (S100); dividing the adiabatic coupling waveguide segment (200) into N small segments at intervals of an equal gap width, and calculating the coupling efficiency of each waveguide intrinsic mode between cross sections of the adiabatic coupling waveguide segment (200) (S200), wherein N is a positive integer; acquiring a parametric curve, wherein the parametric curve corresponds to the width of the gap which changes along with the length of the adiabatic coupling waveguide segment (200) (S300); acquiring length intervals of the N small segments corresponding to the parametric curve, and by means of combining the length intervals with the coupling efficiency, calculating the transmission efficiency of the current adiabatic coupling waveguide segment (200) (S400); and modifying the shape of the parametric curve, and updating the transmission efficiency of the adiabatic coupling waveguide segment (200) (S500).

## Description

### CROSS-REFERENCE TO RELATED APPLICATION

This application is filed on the basis of the Chinese patent application No. 202010835813.8 filed August 19, 2020, and claims priority of the Chinese patent application, the entire contents of which are incorporated herein by reference.

### TECHNICAL FIELD

The present application relates to, but is not limited to, the technical field of silicon-based photonic integrated chips, in particular to a method for designing an adiabatic coupling waveguide section of adiabatic coupler, a device, an apparatus, and a computer-readable storage medium.

### BACKGROUND

Term "Adiabatic" refers to the phenomenon that when the parameters of the waveguide (or potential well) change slowly, the light field (wave function) originally in a certain mode (such as the eigenstate) remains in the corresponding mode (such as the eigenstate) after the change.

Adiabatic coupler (ADC) is a component that is replaceable of 2×2 multimode interference coupler or ordinary directional coupler in the silicon-based photonic integrated chip, which has the characteristics of low loss and wide wavelength flatness. An adiabatic coupler can include an input section, an adiabatic section and an output section. The two waveguides in the input section are designed with one end wide and one end narrow. The two waveguides in the input section are arranged far from each other apart, such that no substantive coupling occurs between the waveguides. The waveguides in the input section determine the waveguide width and become closer to each other towards the coupling section. The two waveguides in the output section are symmetrically separated, if only the bending radius of the waveguides should be large enough to avoid loss. The adiabatic coupling waveguide section is the main part of the adiabatic coupler, which is dominant in length.

However, due to the need for stability in the production process, it is not possible to have the minimum value of the gap between two coupling waveguides in the adiabatic coupling waveguide section of the adiabatic coupler to be too small. For example, when the minimum value of the gap between two coupling waveguides is above 300nm, the mass production performance of the adiabatic coupler is relatively stable. The coupling efficiency decreases as the gap between two coupled waveguides increases, such that a slower width change of the adiabatic coupling waveguide section is required, which will lead to the adiabatic coupler with a longer length. In such a case, an adiabatic coupler with an undesirable long length will be formed by design with a linear variation of parameters. And it is challenging to integrate such an adiabatic coupler into the silicon-based photonic integrated chip. Therefore, it is important to find a better design method to reduce the length of the adiabatic coupler.

### SUMMARY

The following is a summary of the subject matter described herein. This summary is not intended to limit the scope of protection of the claims.

Provided are a method for designing an adiabatic coupling waveguide section of an adiabatic coupler, a device, an apparatus, and a computer-readable storage medium in some embodiments of the present application.

An embodiment of the present application provides a method for designing an adiabatic coupling waveguide section of an adiabatic coupler, which includes, acquiring a plurality of initial parameters of the adiabatic coupling waveguide section, and determining an initial model of the adiabatic coupling waveguide section according to the initial parameters, where the initial model includes a first coupling waveguide and a second coupling waveguide, and a gap is arranged between the first coupling waveguide and the second coupling waveguide; virtually dividing the adiabatic coupling waveguide section into N segments with equal intervals along a width, and calculating each coupling efficiency of respective waveguide eigenmodes between cross sections of the adiabatic coupling waveguide section, where N is a positive integer; acquiring a parametric curve which corresponds to a width variation of the gap with a length variation of the adiabatic coupling waveguide section; acquiring length intervals of the N segments corresponding to the parametric curve, combining each length interval with a respective coupling efficiency, and calculating the transmission efficiency of the current adiabatic coupling waveguide section; and modifying a shape of the parametric curve, and updating the transmission efficiency of the adiabatic coupling waveguide section.

An embodiment of the present application provides a processing device, which includes a memory, a processor, and a computer program stored in the memory and executable by the processor which, when executed by the processor, causes the processor to carry out the method as described above.

An embodiment of the present application provides a computing apparatus, which includes the processing device as described above.

An embodiment of the present application provides a computer-readable storage medium storing a computer-executable instruction which, when executed by a processor causes the processor to carry out the method as described above.

Other features and advantages of the present application will be illustrated in the following description, and in part will be apparent from the description, or may be understood by practicing the present application. The objects and other advantages of the present application can be achieved and obtained by the structure particularly set forth in the description, claims and drawings.

### BRIEF DESCRIPTION OF DRAWINGS

The drawings are intended to provide a further understanding of the technical scheme of the present application, and constitute a part of the specification, and they are intended to illustrate the technical scheme of the present application in conjunction with the embodiments of the present application, but are not intended to limit the technical scheme of the present application.
FIG. 1 depicts a schematic diagram showing an adiabatic coupler to be designed according to an embodiment of the present application;
FIG. 2 depicts a flowchart showing a method for designing an adiabatic coupling waveguide section of an adiabatic coupler according to an embodiment of the present application;
FIG. 3 depicts a flowchart showing a method for designing an adiabatic coupling waveguide section of an adiabatic coupler according to another embodiment of the present application;
FIG. 4 depicts a schematic diagram showing a tabular method for acquiring a first mapping relationship according to an embodiment of the present application;
FIG. 5 depicts a flowchart showing a method for designing an adiabatic coupling waveguide section of an adiabatic coupler according to another embodiment of the present application;
FIG. 6 depicts a sectional view showing an initial model and an auxiliary model according to an embodiment of the present application;
FIG. 7 depicts a schematic diagram showing an adiabatic coupler section to be designed according to another embodiment of the present application;
FIG. 8 depicts a schematic diagram showing an optimized parametric curve according to an embodiment of the present application;
FIG. 9 depicts the test result of the coupling ratio of a 3dB linear adiabatic coupler with an adiabatic coupling waveguide section length of 300µm; and
FIG. 10 depicts the test result of the coupling ratio of a 3dB linear adiabatic coupler with an adiabatic coupling waveguide section length of 250µm optimized by the design method of an embodiment of the present application.

### DETAILED DESCRIPTION

The purpose, technical scheme and advantages of the present application will become apparent through the following description for various embodiments in conjunction with the drawings. It should be understood that the embodiments described here are intended for illustration but not limitation of the present application.

It shall be noted that, in some cases, the steps shown or described may be performed in a different order than the logical order shown in the flowcharts. It should be noted that the terms "first" and "second", if used in the description and the drawings are intended to distinguish similar objects, and does not necessarily imply any specific order or sequence.

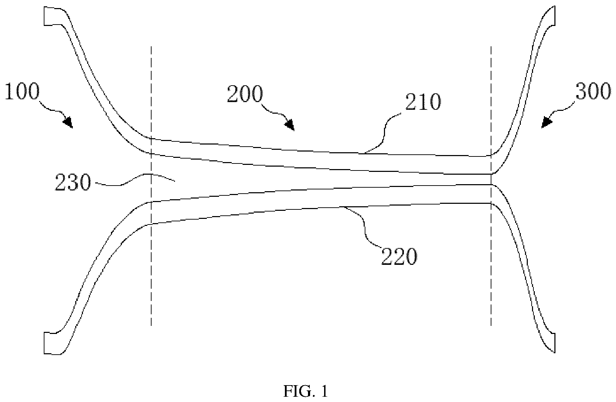

As shown in FIG. 1, the adiabatic coupler includes an input section 100, an adiabatic coupling waveguide section 200, and an output section 300. The two waveguides in the input section 100 are designed with one end wide and one end narrow. The two waveguides in the input section are arranged far from each other apart, such that no substantive coupling occurs between the waveguides. The waveguides in the input section determine the waveguide width and become closer to each other towards the coupling section. The two waveguides in the output section 300 are symmetrically separated, if only the bending radius of the waveguides should be large enough to avoid loss. The adiabatic coupling waveguide section 200 is the main part of the adiabatic coupler, which is dominant in length. The adiabatic coupling waveguide section 200 includes a first coupling waveguide 210 and a second coupling waveguide 220 which are close to each other, and a gap 230 is arranged between the first coupling waveguide 210 and the second coupling waveguide 220.

Due to the need for stability in the production process, it is not possible to have the minimum value of the gap between two coupling waveguides in the adiabatic coupling waveguide section of the adiabatic coupler be too small. For example, when the minimum value of the gap between two coupling waveguides is above 300nm, the performance of the adiabatic coupler is relatively stable. The coupling efficiency decreases as the gap between two coupled waveguides increases, such that a slower width change of the adiabatic coupling waveguide section is required to maintain the adiabatic requirements, which will lead to the adiabatic coupler with a longer length. In such a case, an adiabatic coupler with an undesirable long length will be formed by design with a linear variation of parameters. And it is challenging to integrate such an adiabatic coupler into the silicon-based photonic integrated chip.

In order to at least alleviate at least one of the above technical problems, the present application provides a method for designing an adiabatic coupling waveguide section of an adiabatic coupler, a device, an apparatus, and a computer-readable storage medium in some embodiments. First, an initial parameter of the adiabatic coupling waveguide section is acquired, and an initial model of the adiabatic coupling waveguide section is determined according to the initial parameters, where the initial model includes a first coupling waveguide and a second coupling waveguide, and a gap is arranged between the first coupling waveguide and the second coupling waveguide. Second, the adiabatic coupling waveguide section is virtually divided into N segments with equal intervals along a width. Each coupling efficiency of respective waveguide eigenmodes between cross sections of the adiabatic coupling waveguide section is calculated. Length intervals of the N segments corresponding to the parametric curve are acquired. Transmission efficiency of the current adiabatic coupling waveguide section is calculated with the length intervals combining the coupling efficiency. The shape of the parametric curve is modified such that the shape of the adiabatic coupling waveguide section is adjusted. And transmission efficiency of the adiabatic coupling waveguide section is updated. In the whole design process, the shape of the parametric curve is adjusted by nonlinear parameter variation. Therefore, compared with the design of adiabatic coupling waveguide section by linear parameter variation in some cases, the scheme set forth in an embodiment of the present application can reduce the length of the adiabatic coupling waveguide section under the condition that the adiabatic coupling waveguide section meets the adiabatic requirements, thus reducing the length of the adiabatic coupler.

Some embodiments of the present application will be further illustrated with reference to the drawings.

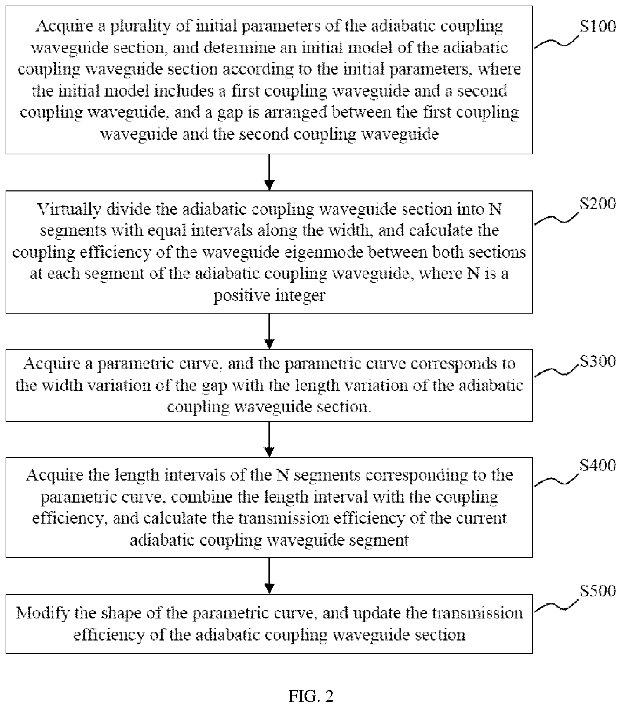

FIG. 2 depicts a flowchart showing a method for designing an adiabatic coupling waveguide section for an adiabatic coupler according to an embodiment of the present application. As shown in FIG. 2, the method includes but is not limited to operations S100, S200, S300, S400, and S500.

At S 100, a plurality of initial parameters of the adiabatic coupling waveguide section is acquired, and an initial model of the adiabatic coupling waveguide section is determined according to the initial parameters, where the initial model includes a first coupling waveguide and a second coupling waveguide, and a gap is arranged between the first coupling waveguide and the second coupling waveguide.

In an embodiment, the initial parameters of the adiabatic coupling waveguide section include the first start width and the first end width of the first coupling waveguide, the second start width and the second end width of the second coupling waveguide, and the third start width and the third end width of the gap. Therefore, once the initial parameters of the adiabatic coupling waveguide section are determined, the initial shape of the adiabatic coupling waveguide section, that is, the initial model, can be determined. The first end width of the first coupling waveguide is identical to the second end width of the second coupling waveguide.

In an embodiment, the initial parameters of the adiabatic coupling waveguide section can be determined according to the mode effective refractive index of the start end of the adiabatic coupling waveguide section, the minimum gap width limitation of the production process on the tail end of the adiabatic coupling waveguide section, and the splitting design goal of the adiabatic coupler.

At S200, the adiabatic coupling waveguide section is virtually divided into N segments with equal intervals along the width, and the coupling efficiency of the waveguide eigenmode between both sections at each segment of the adiabatic coupling waveguide is calculated, where N is a positive integer.

In an embodiment, the adiabatic coupling waveguide section is virtually divided into N segments with equal intervals along the width, where the width variation between the adjacent segments is Δ*g* , where *N* = |*W_{end} - Wₛₜₐᵣₜ*|/Δ*g* , and *W_{end}* is the start width of the gap (i.e. the third start width) and *Wₛₜₐᵣₜ* is the end width of the gap (i.e. the third end width). As the value of the width variation is small, the width of the gap in each segment can be considered as nearly constant. Once the adiabatic coupling waveguide section is virtually divided into N segments with equal intervals along the width, the coupling efficiency of the waveguide eigenmode between both sections at each segment of the adiabatic coupling waveguide can be calculated.

In an embodiment, numerical simulation can be carried out by Eigenmode Expansion (EME), such that the coupling efficiency of the waveguide eigenmode between two adjacent sections at each segment of the adiabatic coupling waveguide can be calculated. Thereby, the coupling efficiency of the waveguide eigenmode between both sections at each segment of the adiabatic coupling waveguide is calculated, for subsequent calculations of the transmission efficiency by means of the coupling efficiency.

At S300, a parametric curve is acquired, and the parametric curve corresponds to the width variation of the gap with the length variation of the adiabatic coupling waveguide section.

In an embodiment, the parametric curve may have various implementations. For example, the parametric curve can be an arc splicing curve or a Bezier curve, which can be appropriately selected according to the actual application situation, and this embodiment is not limited thereto.

As the parametric curve corresponds to the width variation of the gap versus the length of the adiabatic coupling waveguide section, so it can be considered that the parametric curve corresponds to the shape of the first coupling waveguide in the gap adjacent to the gap, or the shape of the second coupling waveguide adjacent to the gap. Due to the symmetry of the adiabatic coupling waveguide section in the adiabatic coupler, it can be considered that the parametric curve corresponding to the shape of the first coupling waveguide adjacent to the gap mirrors the parametric curve corresponding to the shape of the second coupling waveguide adjacent to the gap. Thus, once one of the parametric curves is determined, the other parametric curve can be determined accordingly.

At S400, the length intervals of the N segments corresponding to the parametric curve are acquired, the length interval is combined with the coupling efficiency, and the transmission efficiency of the current adiabatic coupling waveguide segment is calculated.

In an embodiment, since the parametric curve corresponds to the shape of the coupling waveguide adjacent to the gap, and N segments are obtained by virtually dividing the adiabatic coupling waveguide section along the width, the length intervals of the N segments corresponding to the parametric curve can be obtained. Thereby, the transmission efficiency of the current adiabatic coupling waveguide segment can be calculated with the length interval in conjunction with the coupling efficiency.

Since the parametric curve corresponds to the shape of the coupling waveguide adjacent to the gap, it can be considered that the parametric curve is in the length-width coordinate system established according to the length direction of the adiabatic coupled waveguide section and the width direction of the gap. Therefore, the acquisition of the length intervals of the N segments corresponding to the parametric curve can have various implementations. For example, the length intervals of the N segments corresponding to the parametric curve can be acquired according to the coordinate system where the parametric curve is located and the coordinate information of the parametric curve in this coordinate system. For another example, the front and rear widths of the gap of each segment can be interpolated into the parametric curve as an independent variable to obtain two length positions corresponding to the width of the front and rear gaps respectively, and the difference between the two length positions is the length interval of the parametric curve corresponding to the current section.

In an embodiment, after the length intervals of the parametric curve corresponding to the N segments are acquired, the length intervals can be given to each segment corresponding to each calculated waveguide eigenmodes to determine the phase information of each waveguide eigenmode. For example, the front width *Wᵢ* and the rear width *W*_{*i*+1} of each segment are interpolated into the parametric curve as independent variables, so that the position in length *Lᵢ* corresponding to the front width *Wᵢ* and the position in length *L*_{*i*+1} corresponding to the rear width W_{*i*+1} of each segment can be obtained, and the length interval of each segment is Δ*Lᵢ* = L_{*i*+1} - *Lᵢ*, (*i* = 1,2,..., *N*)*.* Then, the phase information of the corresponding waveguide eigenmodes can be determined by substituting the length interval of each segment Δ*Lᵢ* into the corresponding calculated waveguide eigenmodes of each segment. Then, a complete transmission matrix is formed with the phase information and the coupling efficiency of each waveguide eigenmode between segments, and the transmission efficiency of the current adiabatic coupling waveguide section can be quickly acquired.

At S500, the shape of the parametric curve is modified, and the transmission efficiency of the adiabatic coupling waveguide section is updated.

In an embodiment, since the parametric curve obtained at S300 is not necessarily the optimal parametric curve, it is necessary to modify the shape of the parametric curve so as to update the transmission efficiency of the adiabatic coupling waveguide section, so that the transmission efficiency of the adiabatic coupling waveguide section corresponding to the parametric curve can meet the design requirements.

In an embodiment, since the shape of the parametric curve is modified, the shape of the adiabatic coupling waveguide section alters correspondingly. So, it is necessary to update the transmission efficiency of the adiabatic coupling waveguide section accordingly, so as to determine whether the transmission efficiency of the adiabatic coupling waveguide section corresponding to the modified parametric curve meets the design requirements.

In an embodiment, when it is necessary to update the transmission efficiency of the adiabatic coupling waveguide section, the length interval of each segment corresponding to the modified parametric curve is obtained first. Then the length interval is given to the calculated waveguide eigenmodes corresponding to each segment, to determine the phase information of each waveguide eigenmode. And then a complete transmission matrix is formed with the coupling efficiency of each waveguide eigenmode between sections, such that the transmission efficiency of the adiabatic coupling waveguide section is updated.

In an embodiment, the adiabatic coupling waveguide section is designed with the method including the above S100, S200, S300, S400, and S500, such that, the adiabatic coupling waveguide section is virtually divided into N segments with equal intervals along a width. Each coupling efficiency of respective waveguide eigenmodes between cross sections of the adiabatic coupling waveguide section is calculated. Length intervals of the N segments corresponding to the parametric curve are acquired. Transmission efficiency of the current adiabatic coupling waveguide section is calculated with the length intervals combining the coupling efficiency. The shape of the parametric curve is modified such that the shape of the adiabatic coupling waveguide section is adjusted. And transmission efficiency of the adiabatic coupling waveguide section is updated. In the whole design process, the shape of the parametric curve is adjusted by nonlinear parameter variation. Therefore, compared with the design of the adiabatic coupling waveguide section by linear parameter variation in some cases, this embodiment can reduce the length of the adiabatic coupling waveguide section under the condition that the adiabatic coupling waveguide section meets the adiabatic requirements, thus reducing the length of the adiabatic coupler.

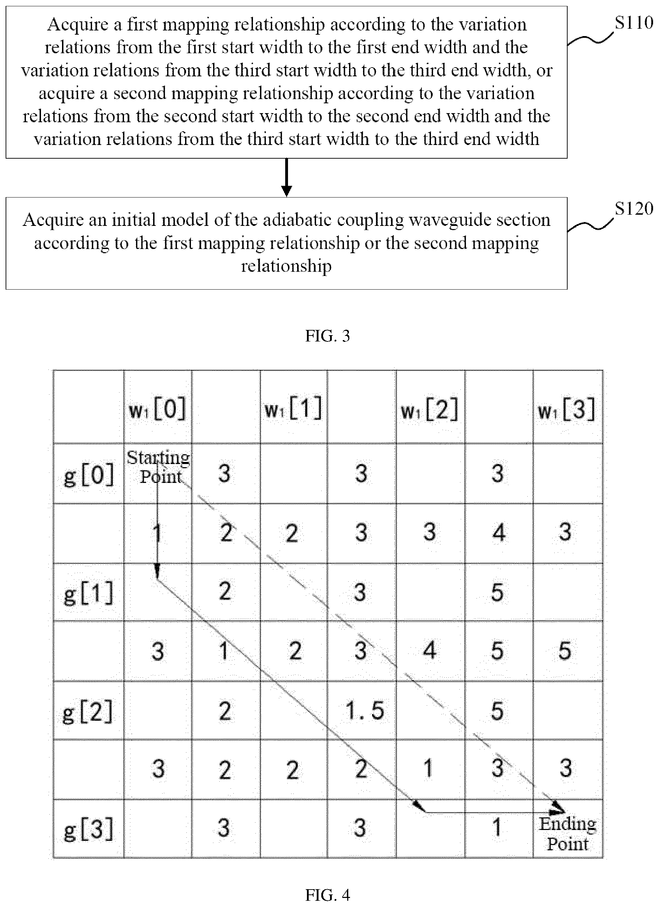

In an embodiment, referring to FIG. 3, the determination of the initial model of the adiabatic coupling waveguide section according to the initial parameters at S 100 includes, but is not limited to, the following operations.

At S110, a first mapping relationship is acquired according to the variation relations from the first start width to the first end width and the variation relations from the third start width to the third end width, or a second mapping relationship is acquired according to the variation relations from the second start width to the second end width and the variation relations from the third start width to the third end width.

At S120, an initial model of the adiabatic coupling waveguide section is acquired according to the first mapping relationship or the second mapping relationship.

In an embodiment, in order to determine the initial model of the adiabatic coupling waveguide section, it is necessary to first determine the relationship between the widths of the first and second coupling waveguides and the width of the gap with the length of the adiabatic coupling waveguide section. That is, it is necessary to first determine the variation relations *w*₁(*z*) from the first start width to the first end width, the variation relations *w*₂(*z*) from the second start width to the second end width, and the variation relations *g*(*z*) from the third start width to the third end width, where *w*₁ is the width of the first coupling waveguide, *w*₂ is the width of the second coupling waveguide, and z is the width of the adiabatic coupling waveguide section. Due to the symmetry of the adiabatic coupling waveguide sections, *w*₁(*z*) can be set as a reverse variation of *w*₂(*z*), that is, the sum of the *w*₁(*z*) and *w*₂(*z*)will remain constant. Thus, it is only necessary to determine one of *w*₁(*z*) or *w*₂(*z*) during the design of the waveguide, so the design time can be reduced and the design efficiency can be improved.

In an embodiment, the design of the adiabatic coupling waveguide sections can be carried out by EME. Because the EME can quickly simulate the length of each section for a given waveguide cross-section, the first mapping relationship *w*₁(*g*)can be obtained according to the *w*₁(*z*) and *g*(*z*), or the second mapping relationship *w*₂(*g*) can be obtained according to the *w*₂(*z*) and *g*(*z*), and then the initial model of the adiabatic coupling waveguide section can be obtained according to *w*₁(*g*) or *w*₂(*g*). After determining *w*₁(g) or *w*₂(*g*), the shape of each waveguide cross section that the optical signal experiences when propagating in the adiabatic coupling waveguide section is determined (the width of each gap *g* corresponds to the particular two waveguide widths *w*₁ and *w*₂). Thereby, the initial model of the adiabatic coupling waveguide section can be determined, and then the adiabatic coupling waveguide section that meets the design requirements can be obtained through optimization in the subsequent operations.

In an embodiment, the first mapping relationship *w*₁(*g*) or the second mapping relationship *w*₂(*g*) can be obtained by linear variation of parameters. Alternatively, *w*₁(*g*) and *w*₂(*g*)can be obtained by nonlinear variation of parameters. This embodiment is not limited thereto. FIG. 4 shows the acquisition of *w*₁(*g*) in a tabular method, by way of an example for acquisition of *w*₁(*g*) by nonlinear variation of parameters. The tabular method includes the following procedure. First, the parameters of the variation in the width of the first coupling waveguide *w*₁ with the width of the gap *g* are made into a table as shown in FIG. 4. In the table as shown in FIG. 4, the row coordinate indicates the scanning of the variation in the width of the waveguide, and the column coordinate indicates the scanning of the variation in the width of the gap. The grid points without numerical values in the table represent the *w*₁-*g* parameters, and the grid points with numerical values in the table represent the adiabatic length coefficient required for the change between the two parameters *w*₁ - *g* . In the table, two coupling efficiencies are obtained between two waveguide cross sections corresponding to every two adjacent parameters *w*₁ *- g* (including diagonal adjacency) by overlapping and integrating odd and even modes. And these two coupling efficiencies are indicative of the adiabatic length coefficient required for adiabatic change between the two parameters *w*₁ - *g* . Therefore, the first mapping relationship *w*₁(*g*) can be obtained by looking for the shortest cumulative route of adiabatic length coefficients between the start lattice parameters and the end lattice parameters of the adiabatic coupling waveguide section in the table. As shown in FIG. 4, the grid points corresponding to *w*₁[0] and *g*[0] are the start grid points of the adiabatic coupling waveguide section, and the grid point corresponding to *w*₁[3] and *g*[3]are the end grid points of adiabatic coupling waveguide section. Therefore, the dotted line path in FIG. 4 represents the first mapping relationship of linear variation, while the solid line path represents the minimum path of total adiabatic length coefficient with nonlinear variation from the start grid point parameter to the end grid point parameter. At this time, according to the grid points with numerical values, the total adiabatic length coefficient of this minimum path is 1+1+2+1=5. That is, the first mapping relation with the shortest total adiabatic length *w*₁(*g*) can be obtained.

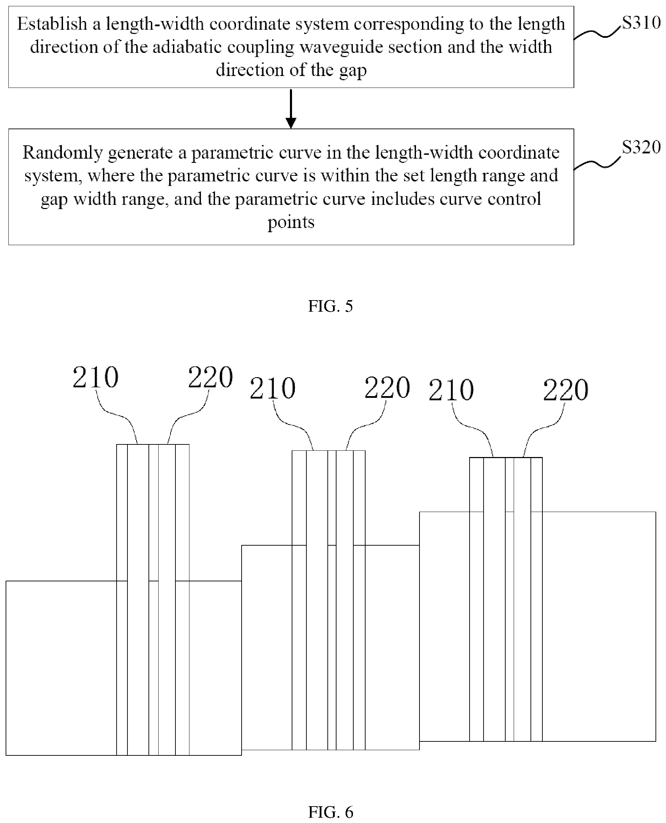

In an embodiment, referring to FIG. 5, the acquisition of the parametric curve at S300 includes, but is not limited to, the following operations.

At S310, a length-width coordinate system corresponding to the length direction of the adiabatic coupling waveguide section and the width direction of the gap is established.

At S320, a parametric curve in the length-width coordinate system is randomly generated, where the parametric curve is within the set length range and gap width range, and the parametric curve includes curve control points.

In an embodiment, the coordinates of the curve control points of the parametric curve are randomly generated, so the shape of the parametric curve is also random. In addition, a default parametric curve can also be automatically generated by the system according to the preset length range and the preset gap width range. Since the generated parametric curve may be not the optimal one, the shape of the parametric curve can be modified by adjusting the coordinates of the control points of the curve. The coordinates of the control points of the curve can be easily adjusted, for being two-dimensional arrays. For example, the coordinate values of the control points of the curve can be adjusted manually, or can be adjusted by a preset system algorithm, such as automatically traversing by setting the step size of numerical change.

In an embodiment, the modification of the shape of the parametric curve at S500 includes, but is not limited to, the following operations.

The shape of the parametric curve is modified by modifying the coordinates of curve control points of the parametric curve.

In an embodiment, the shape of the parametric curve is modified by adjusting the coordinates of the curve control points. After the shape of the parametric curve is modified, the shape of the corresponding adiabatic coupling waveguide section is modified as well. In some cases, it is necessary to perform simulation and calculation of the structure of the adiabatic coupling waveguide section again, after the shape of the adiabatic coupling waveguide section is modified. However, in this embodiment, the start width and the end width of the adiabatic coupling waveguide section are kept unchanged (the first start width and the first end width of the first coupling waveguide, the second start width and the second end width of the second coupling waveguide, and the third start width and the third end width of the gap are unchanged). The shape of the parametric curve is controlled by the curve control points. So, it is not necessary to reconstruct the formula and formula coefficient of the parametric curve. The shape change in the parametric curve will only affect the length interval of each of the N segments. The waveguide eigenmode of each segment and the coupling efficiency of the waveguide eigenmodes of each two adjacent segments is calculated at S400. Therefore, the transmission efficiency of the adiabatic coupling waveguide segment can be quickly updated by simply giving the length interval of each segment changed due to the shape change of the parametric curve to the calculated waveguide eigenmode.

In an embodiment, the method for designing the adiabatic coupling waveguide section further includes, but is not limited to, the following operations.

The shape of the parametric curve is consecutively modified until the transmission efficiency of the adiabatic coupling waveguide section meets the preset conditions, and the corresponding optimal parametric curve is obtained.

In an embodiment, after consecutively modifying the shape of the parametric curve and simulating the transmission efficiency of the adiabatic coupling waveguide section corresponding to the shape of the parametric curve until the transmission efficiency meets the preset conditions, the corresponding parametric curve is the optimal parametric curve, and the shape of the adiabatic coupling waveguide section corresponding to the optimal parametric curve is the optimal shape.

In an embodiment, the preset condition may be that the transmission efficiency is greater than a certain preset threshold. The transmission efficiency of the adiabatic coupling waveguide section meeting the preset conditions, indicates that the mode loss of the adiabatic coupling waveguide section is relatively low, and the even and odd modes of the adiabatic coupling waveguide section remain adiabatic.

In an embodiment, the consecutive modification of the shape of the parametric curve includes but is not limited to the following operations.

The coordinates of curve control points of the parametric curve are modified by an optimization algorithm, and the shape of the parametric curve is optimized.

In an embodiment, in order to expedite the optimization, the parametric curve can be modified and optimized by an optimization algorithm. For example, the parametric curve can be optimized with Particle Swarm Optimization (PSO) or a neural network algorithm.

The PSO algorithm is a population-based search process, in which each individual is called a particle, which is defined as the potential solution of the problem to be optimized in a multi-dimensional search space. And the memory and speed of the historical optimal position and the optimal positions of all particles are stored. In each evolution generation, the information of particles is combined to adjust the component of velocity in each dimension, which is then utilized to calculate the new particle position. Particles consecutively change their states in the multidimensional search space until they reach an equilibrium or optimal state, or exceed the calculation limit.

In an embodiment where the parametric curve is optimized with the PSO algorithm, the coordinates of the curve control points are first served as random initialization particles to initialize the population and the speed. Then, the individual extreme value and the group extreme value are found by calculating the transmission efficiency of the corresponding adiabatic coupling waveguide section. The individual speed and position are consecutively updated until the termination condition is met. Thereby, the coordinates of the curve control points corresponding to the optimal transmission efficiency of the adiabatic coupling waveguide section are obtained, and the corresponding parametric curve and the shape of the adiabatic coupling waveguide sections are determined.

In an embodiment where the parametric curve is optimized with a neural network algorithm, the initial parameters of the adiabatic coupling waveguide section, i.e., the first start width and the first end width of the first coupling waveguide, the second start width and the second end width of the second coupling waveguide, and the third start width and the third end width of the gap, are first input into the trained neural network algorithm to obtain the parametric curve corresponding to the optimal transmission efficiency of the adiabatic coupling waveguide sections. The training of neural network model relies on an established training set, which includes the initial parameters of a plurality of adiabatic coupling waveguide sections and their corresponding parametric curves of optimal transmission efficiency.

The above-mentioned PSO algorithm and neural network algorithm are well known to those having ordinary skills in the art, and which are described in detail here.

In an embodiment, the method for designing the adiabatic coupling waveguide section further includes, but is not limited to, the following operations.

An auxiliary model is obtained according to the initial model. Both the initial model and the auxiliary model correspond to the parametric curve.

Referring to FIG. 6, in an embodiment, in order to solve the problem of machining tolerance in the production process, the corresponding auxiliary model can be obtained by changing the height of the waveguide. Since both the initial model and the auxiliary model correspond to the parametric curve, when modifying the parametric curve, not only the transmission efficiency of the adiabatic coupling waveguide section in the initial model needs to meet the preset conditions (i.e., the adiabatic conditions), but also the transmission efficiency of the adiabatic coupling waveguide section in the auxiliary model needs to meet the preset conditions. Thereby, the robustness of the design can be improved.

In an embodiment, based on the initial model, the auxiliary model can be obtained by changing the height of two waveguides in the adiabatic coupling waveguide section, or changing the height of the bottom slab waveguide, or reducing or increasing the width of the two waveguides in the adiabatic coupling waveguide section by a fixed value with respect to a predetermined value, so as to simulate the deviation of the physical shape of the waveguide that may occur during the tape out process. The number of auxiliary models can be one or more than two, which can be appropriately selected according to the actual application situation, and this embodiment is not limited thereto.

In an embodiment, the length of the initial model equals to that of the auxiliary model, such that both models can be divided into N segments at the same time and at equal gap width intervals. Then, the coupling efficiency of each waveguide eigenmode between each cross-section of the initial model, and the auxiliary model is calculated respectively. After calculating the coupling efficiency of each waveguide eigenmode between the cross sections of the initial model and the auxiliary model, the following operations are performed for both the initial model and the auxiliary model: acquiring the length intervals of the N segments corresponding to the parametric curve, and calculating the transmission efficiency of the current adiabatic coupling waveguide section with the length interval in conjunction with the coupling efficiency. Thereby, the transmission efficiency of the adiabatic coupling waveguide section corresponding to the initial model and the transmission efficiency of the adiabatic coupling waveguide section corresponding to the auxiliary model can be obtained.

In an embodiment, after obtaining the transmission efficiencies of the adiabatic coupling waveguide section corresponding to the initial model and the adiabatic coupling waveguide section corresponding to the auxiliary model, the shape of the parametric curve can be modified to update the transmission efficiencies of the initial model and the auxiliary model synchronously. Only when both the transmission efficiencies of the initial model and the auxiliary model meet the design requirements, the corresponding parametric curve is the optimal parametric curve.

In an embodiment, the method for designing the adiabatic coupling waveguide section further includes, but is not limited to, the following operations.

The shape of the parametric curve is consecutively modified until the transmission efficiency of the initial model and the auxiliary model meet the preset conditions, and the corresponding optimal parametric curve is acquired.

In an embodiment, by consecutively modifying the shape of the parametric curve and simulating the transmission efficiency of the initial model and the auxiliary model corresponding to the shape of the parametric curve, the corresponding parametric curve is the optimal parametric curve when the transmission efficiency of the initial model and the auxiliary model both meet the preset conditions.

In an embodiment, the adjustment of the parametric curve shall meet the transmission efficiencies of both the initial model and the auxiliary model, and the auxiliary model is the error model of the initial model. And thus, different weights can be assigned to the transmission efficiencies of the initial model and the auxiliary model respectively to acquire a weighted average of the transmission efficiencies, and the weighted average is deemed as the average transmission efficiency. Thereby, the coordinates of the curve control points of the parametric curve are consecutively adjusted and the shape of the parametric curve is optimized until the average transmission efficiency meets the preset conditions. For example, when the average transmission efficiency reaches or exceeds the preset efficiency threshold, the corresponding optimized parametric curve can be obtained, and the adiabatic coupling waveguide section meeting the design requirements can be thus obtained.

An example is provided below in order to illustrate the process of the method for designing the adiabatic coupling waveguide section in the embodiments as described above.

### EXAMPLE ONE

An adiabatic coupling waveguide section of the 3dB splitting adiabatic coupler shown in FIG. 1 is designed with a waveguide structure with a core layer height of 220 nm and a slab waveguide height of 150 nm. The length of the adiabatic coupling waveguide section L = 250 µ m.

The design procedure includes six operations. Operations one to three serve to determine the model parameters of the adiabatic coupling waveguide section. Operation four serves to establish an adiabatic coupling waveguide section model. Operation five serves to correspond adiabatic coupling waveguide section model with a parametric curve. And operation six serves to optimize the parametric curve.

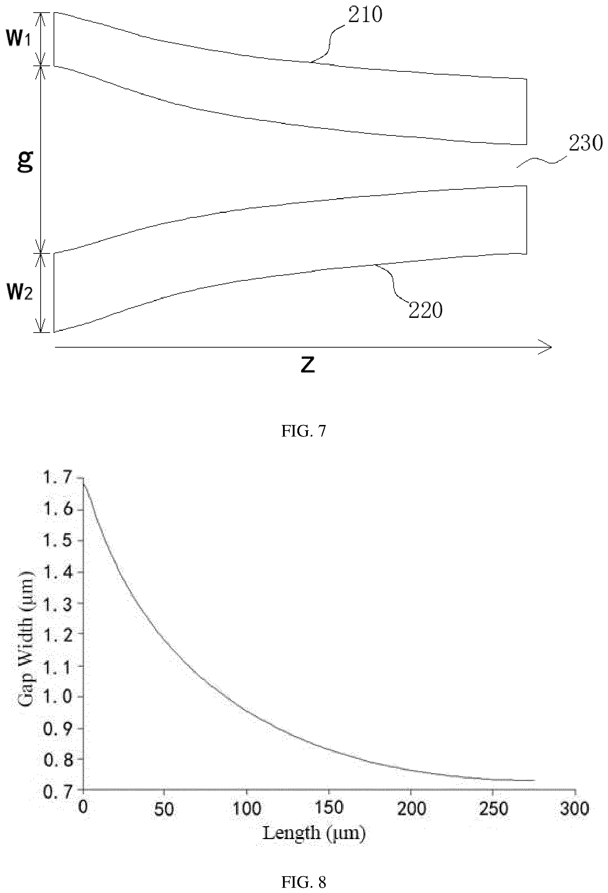

As shown in FIG. 7, the adiabatic coupling waveguide section of the 3dB splitting adiabatic coupler in this example includes three main parameters: waveguide width *w* (*w*₁ and *w*₂), gap width *g* , and waveguide length *z* . Therefore, the relationship between wand *g* can be determined first, and then the relationship between *g* and *z* can be determined, so as to determine all the parameters of the adiabatic coupling waveguide section.

At operation one: the first start width *w*₁(0) and the first end width *w*₁(*L*) of the first coupling waveguide, the second start width *w*₂ (0) and the second end width *w*₂ (L) of the second coupling waveguide, and the third start width *g*(0) and the third end width *g*(L) of the gap in the adiabatic coupling waveguide section are determined, where L is the length of the adiabatic coupling waveguide section (i.e., the length of the first and second coupling waveguides).

Since the adiabatic coupler is a 3dB splitting coupler, *w*₁(*L*) is equal to *w*₂(*L*)*,* that is *w*₁(*L*) = *w*₂ (*L*) = (*w*₁(0)+*w*₂(0))/2 . And *g*(0) requires that the effective refractive index of the odd-even mode equals to the effective refractive index of the single waveguide itself (that is, no coupling between the two waveguides). In addition, *g*(*L*) is limited by the consistency of the production process, so *g*(*L*) is the smallest available gap width.

At operation two, the relationship between the waveguide width and the gap width from the start end to the end end, *w*₁(*g*) or *w*₂(*g*), is determined.

*w*₁(*g*) and *w*₂(*g*) may can be obtained by linear variation of parameters, or can be obtained by the tabular method as shown in FIG. 4, which is not repeated here. Once the relationship between the waveguide width and the gap width from the start end to the end end *w*₁(*g*), or *w*₂(*g*) is determined, the initial model of adiabatic coupling waveguide section can be obtained.

At operation three, two auxiliary models with two different waveguide heights are generated with the machining tolerance taken into account, on the basis of the initial model, as shown in FIG. 6, and three simulation structures of the adiabatic coupling waveguide section are obtained.

At operation four, the three simulation structures are virtually divided into N segments with equal intervals along the width Δ*g* simultaneously, and the waveguide eigenmode of each segment and the coupling efficiency between the waveguide eigenmodes of each two adjacent segments is calculated through eigenmode expansion. The initial model shall be divided together with the two auxiliary models at the same position simultaneously, so the coupling efficiencies of the three simulation structures can be calculated simultaneously.

At operation five, a parametric curve within the preset length range and the preset gap width range in the *g* - *z* coordinate system, and curve control points for controlling the shape of the parametric curve are acquired, where the parametric curve corresponds to *g* - z variations. According to the gap value between the first and end of the divided N segments, the length intervals Δ*z* of the N segments corresponding to the adjusted parametric curve are obtained by interpolation, and then each length interval Δ*z* is assigned to the calculated waveguide eigenmode corresponding to a respective segment, to obtain the respective phase information. And then the transmission efficiency of the three simulation structures can be obtained according to the phase information and coupling efficiency corresponding to the length interval Δ*z* , so that the transmission efficiency of the even and odd modes of the three simulation structures can be updated quickly.

At operation six, the transmission efficiencies of the three simulation structures are respectively assigned with different weights to obtain a weighted average of the transmission efficiencies, and the weighted average is deemed as the average transmission efficiency. By modifying the coordinates of the curve control points to adjust the shape of the parametric curve, the average transmission efficiency of the simulated structure corresponding to different parametric curves (i.e., *g*(*z*)) can be calculated relatively quickly. Based on the average transmission efficiency, the corresponding optimized parametric curve can be obtained by modifying the parametric curve until the corresponding average transmission efficiency is better than the preset efficiency threshold of the design requirement, for example, the average transmission efficiency is at or above the preset efficiency threshold. FIG. 8 depicts the optimized parametric curve (i.e., *g*(*z*)). PSO algorithm or neural network model can be applied to find the optimal curve control points or optimize parametric curves, when modifying the coordinates of curve control points to adjust the shape of parametric curves, until the evaluation function is better than the target optimization parameters.

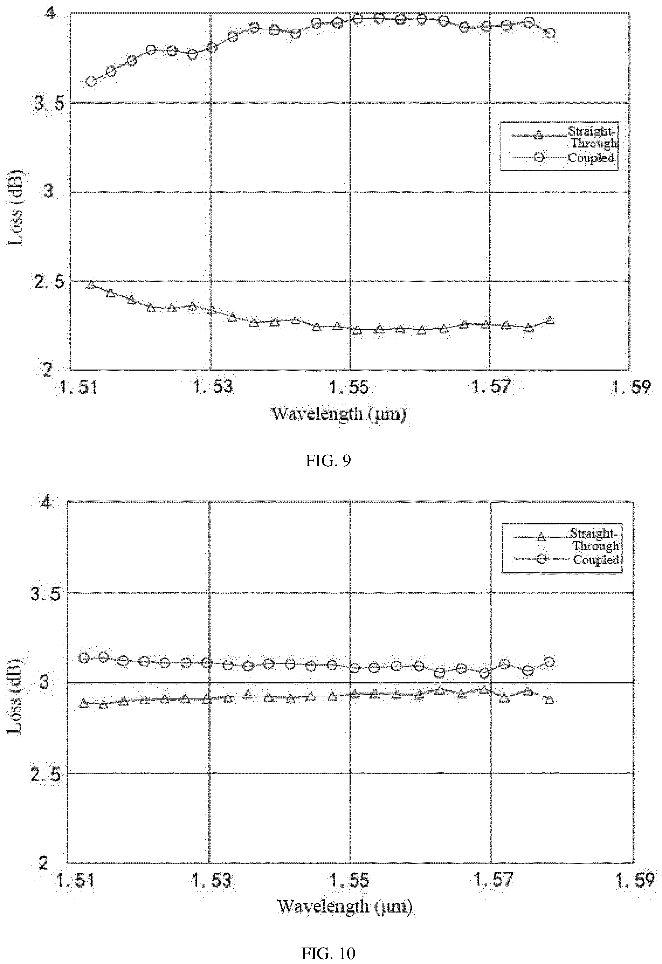

Referring to FIG. 9 and FIG. 10. FIG. 9 depicts the test result of the coupling ratio of a 3dB linear adiabatic coupler with adiabatic coupling waveguide section length of 300 µm. FIG. 10 depicts the test result of the coupling ratio of a 3dB linear adiabatic coupler with adiabatic coupling waveguide section length of 250µm optimized by the design method of this example. Comparison of the test results in FIG. 9 and FIG. 10 shows that even though the length of the adiabatically coupled waveguide section in the 3dB linear adiabatic coupler is up to 300µm, the adiabatic requirement is not met yet. The 3dB adiabatic coupler optimized by the method for designing an adiabatic coupling waveguide segment of this example, the splitting is close to 3dB, even at the length of 250µm of the adiabatically coupled waveguide section, so a better adiabatic effect is achieved. Therefore, by means of the method for designing an adiabatic coupling waveguide segment in this example, the length of the adiabatic coupling waveguide segment can be reduced while meeting the adiabatic requirements, and thus the length of the adiabatic coupler can be reduced.

An embodiment of the application provides a processing device, which includes a memory, a processor and a computer program stored in the memory and executable by the processor.

The processor and the memory may be connected by a bus or other means.

As a non-transitory computer-readable storage medium, the memory can be configured to store non-transitory software programs and non-transitory computer-executable programs. In addition, the memory may include high-speed random-access memory and non-transitory memory, such as at least one disk memory device, flash memory device, or other non-transitory solid-state memory devices. In some embodiments, the memory may include memories remotely located with respect to the processor, and these remote memories may be connected to the processor through a network. Examples of the above networks include, but are not limited to, the Internet, intranet, local area network, mobile communication network, and combinations thereof.

Non-transitory software programs and instructions for the method for designing an adiabatic coupling waveguide section of adiabatic coupler of the above embodiment are stored in a memory which, when executed by a processor, causes the processor to carry out the method for designing an adiabatic coupling waveguide section of adiabatic coupler, e.g., S100 to S500 described in conjunction with FIG. 2, S 110 to S 120 described in conjunction with FIG. 3, or S310 to S320 described in conjunction with FIG. 5.

An embodiment of the present application also provides a computing apparatus, which includes the processing device as described in the above embodiment. The computing apparatus can be a local computing apparatus such as a personal computer, a tablet, a mobile phone, or a cloud computing device such as a cloud server, a LAN server, and a cloud host.

The above-described device embodiments are only illustrative, in which the units illustrated as separate components may or may not be physically separated, that is, they may be located in one place or distributed over several network units. Some or all of the modules can be selected according to the practical needs to achieve the purpose of this embodiment.

An embodiment of the present application provides a computer-readable storage medium, which stores a computer-executable instruction which, when executed by a processor or controller, for example, by a processor in the above-described processing device, causes the processor to carry out the method for designing an adiabatic coupling waveguide section above e.g., S 100 to S500 described in conjunction with FIG. 2, S 110 to S 120 described in conjunction with FIG. 3, or S310 to S320 described in conjunction with FIG. 5.

An embodiment of the present application includes, acquiring a plurality of initial parameters of the adiabatic coupling waveguide section, and determining an initial model of the adiabatic coupling waveguide section according to the initial parameters, where the initial model includes a first coupling waveguide and a second coupling waveguide, and a gap is arranged between the first coupling waveguide and the second coupling waveguide; virtually dividing the adiabatic coupling waveguide section into N segments with equal intervals along a width, and calculating each coupling efficiency of respective waveguide eigenmodes between cross sections of the adiabatic coupling waveguide section, where N is a positive integer; acquiring a parametric curve which corresponds to a width variation of the gap with a length variation of the adiabatic coupling waveguide section; acquiring length intervals of the N segments corresponding to the parametric curve, and calculating the transmission efficiency of the current adiabatic coupling waveguide section with the length intervals combining the coupling efficiency; and modifying a shape of the parametric curve, and updating transmission efficiency of the adiabatic coupling waveguide section. According to the scheme set forth in an embodiment of the present application, the adiabatic coupling waveguide section is virtually divided into N segments with equal intervals along a width. Each coupling efficiency of respective waveguide eigenmodes between cross sections of the adiabatic coupling waveguide section is calculated. Length intervals of the N segments corresponding to the parametric curve are acquired. Transmission efficiency of the current adiabatic coupling waveguide section is calculated with the length intervals combining the coupling efficiency. The shape of the parametric curve is modified such that the shape of the adiabatic coupling waveguide section is adjusted. And transmission efficiency of the adiabatic coupling waveguide section is updated. In the whole design process, the shape of the parametric curve is adjusted by nonlinear parameter variation. Therefore, compared with the design of adiabatic coupling waveguide section by linear parameter variation in some cases, the scheme set forth in an embodiment of the present application can reduce the length of adiabatic coupling waveguide section under the condition that the adiabatic coupling waveguide section meets the adiabatic requirements, thus reducing the length of adiabatic coupler.

It shall be appreciated by a person having ordinary skills in the art that all or some of the steps and systems disclosed above can be implemented as software, firmware, hardware and their appropriate combinations. Some or all physical components can be implemented as software executed by a processor, such as a central processing unit, a digital signal processor or a microprocessor, or as hardware, or as an integrated circuit, such as an application specific integrated circuit. Such software can be distributed on computer-readable media, which can include computer storage media (or non-transitory media) and communication media (or transitory media). As is well known to a person having ordinary skills in the art, the term computer storage medium includes volatile and nonvolatile, removable and non-removable medium implemented in any method or technology for storing information such as computer-readable instructions, data structures, program modules or other data. Computer storage mediums include, but are not limited to, RAM, ROM, EEPROM, flash memory or other memory technologies, CD-ROM, digital versatile disks (DVD) or other optical disk storage, magnetic boxes, tapes, magnetic disk storage or other magnetic storage devices, or any other medium that can be used to store desired information and accessible by a computer. Furthermore, it is well known to those having ordinary skills in the art that communication media usually contains computer-readable instructions, data structures, program modules or other data in modulated data signals such as carrier waves or other transmission mechanisms, and can include any information delivery media.

Described above is a description for some embodiments of the present application, but the present application is not limited to the above embodiments. Those having ordinary skills in the art can various equivalent modifications or substitutions without departing the scope of the present application, and these equivalent modifications or substitutions are within the scope defined by the claims of the present application.

## Claims

1. A method for designing an adiabatic coupling waveguide section of adiabatic coupler, comprising,
acquiring a plurality of initial parameters of the adiabatic coupling waveguide section, and determining an initial model of the adiabatic coupling waveguide section according to the initial parameters, wherein the initial model comprises a first coupling waveguide and a second coupling waveguide, and a gap is arranged between the first coupling waveguide and the second coupling waveguide;
virtually dividing the adiabatic coupling waveguide section into N segments with equal intervals along a width, and calculating each coupling efficiency of respective waveguide eigenmodes between cross sections of the adiabatic coupling waveguide section, wherein N is a positive integer;
acquiring a parametric curve which corresponds to a width variation of the gap with a length variation of the adiabatic coupling waveguide section;
acquiring length intervals of the N segments corresponding to the parametric curve, combining each length interval with a respective coupling efficiency, and calculating the transmission efficiency of the current adiabatic coupling waveguide section; and
modifying a shape of the parametric curve, and updating the transmission efficiency of the adiabatic coupling waveguide section.

2. The method of claim 1, wherein, the initial parameters comprise, a first start width and a first end width of the first coupling waveguide, a second start width and a second end width of the second coupling waveguide, and a third start width and a third end width of the gap; and
determining an initial model of the adiabatic coupling waveguide section according to the initial parameters comprises,
acquiring a first mapping relationship according to a variation relation from the first start width to the first end width and a variation relation from the third start width to the third end width, or acquiring a second mapping relationship according to a variation relation from the second start width to the second end width and a variation relation from the third start width to the third end width; and
acquiring the initial model of the adiabatic coupling waveguide section according to the first mapping relationship or the second mapping relationship.

3. The method of claim 1, wherein, calculating each coupling efficiency of respective waveguide eigenmodes between cross sections of the adiabatic coupling waveguide section, comprising,
calculating the waveguide eigenmode of each segment, and the coupling efficiency between the waveguide eigenmodes of each pair of two adjacent segments through eigenmode expansion, and acquiring each coupling efficiency of respective waveguide eigenmodes between cross sections of the adiabatic coupling waveguide section.

4. The method of claim 1, wherein, acquiring a parametric curve comprising,
establishing a length-width coordinate system corresponding to a length direction of the adiabatic coupling waveguide section and a width direction of the gap; and
randomly generating a parametric curve in the length-width coordinate system, wherein the parametric curve is positioned within a set length range and gap width range, and the parametric curve comprises a curve control point.

5. The method of claim 1, wherein, acquiring length intervals of the N segments corresponding to the parametric curve comprising,
for each of the N segments, interpolating a front gap width and a rear gap width of a current segment as independent variables to the parametric curve to acquire two length positions corresponding to the front gap width and the rear gap width respectively, and taking a difference between the two length positions as the length interval of the current segment corresponding to the parametric curve.

6. The method of claim 1 or claim 5, wherein, combining each length interval with a respective coupling efficiency, and calculating the transmission efficiency of the current adiabatic coupling waveguide section, comprising,
assigning each length interval to a respective calculated waveguide eigenmode corresponding to a respective segment to determine phase information of a respective waveguide eigenmode, combining each coupling efficiency of the respective waveguide eigenmodes between the cross sections to form a complete transmission matrix, and acquiring the transmission efficiency of the current adiabatic coupling waveguide section.

7. The method of claim 1, wherein, updating the transmission efficiency of the adiabatic coupling waveguide section, comprising,
acquiring a length interval of each segment corresponding to the modified parametric curve, assigning the length interval to the calculated waveguide eigenmode corresponding to a respective segment to determine phase information of a respective waveguide eigenmode, combining each coupling efficiency of the respective waveguide eigenmodes between the cross sections to form a complete transmission matrix, and updating the transmission efficiency of the adiabatic coupling waveguide section.

8. The method of claim 4, wherein, modifying a shape of the parametric curve comprising,
modifying the shape of the parametric curve by modifying a coordinate of the curve control point of the parametric curve.

9. The method of claim 4, further comprising,
consecutively modifying the shape of the parametric curve until the transmission efficiency of the adiabatic coupling waveguide section meets a preset condition, and acquiring a corresponding optimal parametric curve.

10. The method of claim 9, wherein, consecutively modifying the shape of the parametric curve comprising,
modifying the coordinate of the curve control point of the parametric curve by an optimization algorithm, to optimize the shape of parametric curve.

11. The method of claim 1, further comprising,
acquiring an auxiliary model according to the initial model, wherein both the initial model and the auxiliary model correspond to the parametric curve; and
virtually dividing the adiabatic coupling waveguide section into N segments with equal intervals along a width, and calculating each coupling efficiency of respective waveguide eigenmodes between cross sections of the adiabatic coupling waveguide section, comprising,
virtually dividing the initial model and the auxiliary model into N segments with equal intervals along the width respectively, and respectively calculating each coupling efficiency of the respective waveguide eigenmodes between the cross sections of the adiabatic coupling waveguide section for the initial model and the auxiliary model.

12. The method of claim 11, wherein, modifying a shape of the parametric curve, and updating transmission efficiency of the adiabatic coupling waveguide section, comprising,
modifying the shape of the parametric curve and updating the transmission efficiencies of the initial model and the auxiliary model.

13. The method of claim 12, further comprising,
consecutively modifying the shape of the parametric curve until the transmission efficiencies of both the initial model and the auxiliary model meet a preset condition, and acquiring a corresponding optimal parametric curve.

14. A processing device, comprising a memory, a processor, and a computer program stored in the memory and executable by the processor which, when executed by the processor, causes the processor to carry out the method of any one of claim 1 to claim 13.

15. A computing apparatus, comprising the processing device of claim 14.

16. A computer-readable storage medium storing a computer-executable instruction which, when executed by a processor, causes the processor to carry out the method of any one of claim 1 to claim 13.
